# FASCICULE DE BREVET EUROPEEN

(11) **EP 3 833 552 B1**
(45) Date de publication et mention de la délivrance du brevet: **05.10.2022**
(21) Numéro de dépôt: 19753011.6
(22) Date de dépôt: 07.08.2019
(51) Int. Cl.: B60C 11/13, B60C 11/03, B60C 11/12

(54) **BANDE DE ROULEMENT DE PNEU**
REIFENLAUFFLÄCHE
TYRE TREAD

(30) Priorité: 09.08.2018 FR 1857414
(43) Date de publication de la demande: 16.06.2021
(73) Titulaire: COMPAGNIE GENERALE DES ETABLISSEMENTS MICHELIN, 63000 Clermont-Ferrand (FR)
(72) Inventeur: HEROLD, Nicolas, 63040 CLERMONT-FERRAND Cedex 9 (FR)
(74) Mandataire: Millanvois, Patrick Jacques Jean
(86) Numéro de dépôt international: PCT/EP2019/071166
(87) Numéro de publication internationale: WO 2020/030667

(56) Documents cités:
- WO-A1-2017/103442
- WO-A1-2017/103458
- WO-A2-02/38399
- FR-A1- 3 014 022

## Description

### DOMAINE DE L'INVENTION

L'invention concerne les bandes de roulement pour pneus et plus particulièrement les dessins de sculpture de ces bandes dont les performances en drainage de l'eau par temps de pluie sont rendues plus pérennes, ces bandes de roulement ayant en outre des performances améliorées en usure ; cette invention concerne également les pneus pourvus de telles bandes.

### ÉTAT DE LA TECHNIQUE

De façon connue, les conditions de roulage par temps de pluie d'un véhicule poids lourd requièrent une évacuation rapide de l'eau qui peut se trouver dans la région de contact du pneu ou plus particulièrement de sa bande de roulement avec la chaussée. L'évacuation de l'eau permet d'assurer un contact du matériau constituant la bande de roulement avec cette chaussée. L'eau qui n'est pas repoussée sur l'avant et sur les côtés du pneu s'écoule ou est captée en partie dans les découpures ou creux formés dans la bande de roulement du pneu.

Ces découpures ou creux forment un réseau d'écoulement de fluide qui se doit d'être pérenne c'est-à-dire être efficace pendant toute la durée d'utilisation d'un pneu entre son état neuf et son retrait pour cause d'usure atteignant une limite fixée par le manufacturier en accord avec la réglementation en vigueur.

Pour les pneus destinés aux essieux d'un véhicule poids lourd, il est usuel de former, dans la bande de roulement de ces pneus, des rainures circonférentielles (ou rainures longitudinales) dont la profondeur est égale à l'épaisseur totale de la bande de roulement, cette épaisseur totale ne prenant pas en compte l'épaisseur éventuellement prévue pour permettre un renouvellement partiel des rainures par une opération dite de recreusage (« *regrooving* » en anglais). De telles rainures longitudinales permettent d'obtenir une bande de roulement ayant une performance en drainage de l'eau qui est toujours au-dessus d'une performance minimale dite performance de sécurité et cela quel que soit le niveau de l'usure de cette bande dans la limite fixée par le manufacturier.

Pour les pneus de l'état de la technique, le volume total de creux à neuf est en règle générale compris entre 10% et 25% du volume total de la bande de roulement destiné à être usé au cours du roulage (ce volume total correspondant au volume de matière à user auquel est ajouté ledit volume total de creux). On constate que ces pneus ont un volume de creux disponible dans l'aire de contact qui est relativement important à l'état neuf (volume de creux disponible signifiant que ce volume est potentiellement susceptible d'être rempli en partie ou en totalité par de l'eau présente sur la chaussée). Le volume de creux s'ouvrant sur la surface de roulement dans le contact est évalué lorsque le pneu est soumis à ses conditions usuelles de gonflage et de charge telles que définies notamment par le règlement E.T.R.T.O. pour l'Europe. Cette norme indique la pression de gonflage de référence correspondant à la capacité de charge du pneu indiquée par son indice de charge et son indice de vitesse. Ces conditions d'utilisation peuvent aussi être dites "conditions nominales" ou "conditions d'usage".

Si des découpures ou plus généralement des cavités sont indispensables au drainage de l'eau dans la région de contact avec la chaussée, la réduction de volume de matière qui en résulte sur la bande peut affecter sensiblement la performance en usure de cette bande et en conséquence peut réduire la durée d'utilisation du pneu du fait d'une augmentation de la vitesse d'usure de ladite bande.

Parmi les découpures qui peuvent être réalisées par moulage dans une bande de roulement, on distingue les rainures et les incisions. Les incisions, à la différence des rainures, ont une largeur appropriée pour que les parois en vis-à-vis les délimitant viennent en contact au moins partiellement l'une contre l'autre lors du passage dans l'aire de contact. Les rainures génèrent un abaissement sensible des rigidités de compression et de cisaillement de la bande de roulement puisque ces rainures délimitent des portions de matière pouvant se déformer de manière beaucoup plus importante que les portions délimitées par des incisions dont les parois viennent en appui l'une contre l'autre lors du passage dans l'aire de contact. Cette diminution de rigidité, dans le cas de la présence de rainures, induit une augmentation des déformations et est susceptible de générer une diminution de la performance en usure de la bande. On observe une usure plus importante pour une distance parcourue fixée et ceci correspond à une augmentation de la vitesse d'usure de la bande. En outre, on constate une augmentation de la résistance au roulement et donc de la consommation des véhicules équipés de tels pneus, résultant d'une augmentation des pertes hystérétiques liées aux cycles de déformations de la matière composant la bande de roulement. Le document FR 3 014 022 A1 montre une bande de roulement pour véhicule poids-lourd comprenant à l'état neuf des rainures circonférentielles et des canaux transversaux comprenant des ouvertures radiales alternées avec des dispositifs de blocage.

### Définitions :

La surface de roulement d'une bande de roulement correspond à l'ensemble des surfaces élémentaires de la bande pouvant venir en contact avec une chaussée lors du roulage d'un pneu pourvu d'une telle bande de roulement.

Par direction radiale **(Z),** on entend dans le présent document une direction qui est perpendiculaire à l'axe de rotation du pneu (cette direction correspond à la direction de l'épaisseur de la bande de roulement).

Par direction transversale ou axiale **(Y),** on entend une direction parallèle à l'axe de rotation du pneu.

Par direction circonférentielle ou direction longitudinale **(X),** on entend une direction qui est tangente à tout cercle centré sur l'axe de rotation. Cette direction est perpendiculaire à la fois à la direction axiale et à une direction radiale.

Une bande de roulement a une épaisseur maximale de matière à user **(EMU)** en roulage définie entre la surface de roulement à neuf et la limite d'usure légale généralement matérialisée par des témoins d'usure situé par exemple à 1,6 mm du fond des rainures de la bande de roulement.

Le plan médian équatorial **(PME)** est un plan perpendiculaire à l'axe de rotation divisant le pneu en deux moitiés égales.

Les mesures géométriques des éléments de sculpture dont il est question dans la présente demande sont établies en dehors de l'aire de contact lorsque le pneumatique est monté sur sa jante de référence et gonflé à sa pression de référence dans les conditions d'utilisation définies par la norme E.T.R.T.O.

### BREF EXPOSE DE L 'INVENTION

L'objectif de l'invention est de proposer une bande de roulement ayant des performances en usure et en résistance au roulement améliorées tout en maintenant de bonnes performances de traction et d'évacuation de l'eau tout au long de l'usage de la bande de roulement entre son état neuf et son retrait pour cause d'usure atteignant la limite réglementaire.

L'invention propose pour cela une bande de roulement de pneu pour véhicule poids-lourd comprenant à l'état neuf une épaisseur maximale de matière à user en roulage, une surface de roulement, des faces latérales, une région médiane, cette bande de roulement étant pourvue d'éléments de sculpture, lesdits éléments de sculpture comprenant des canaux, des incisions, des ouvertures radiales et des dispositifs de blocage, lesdits canaux étant disposés dans l'épaisseur de la bande de roulement et connectés à la surface de roulement par les ouvertures radiales, lesdites ouvertures radiales étant disposées en alternance avec les dispositifs de blocage le long desdits canaux, cette bande de roulement étant dépourvue de rainure circonférentielle et dans laquelle :
- les canaux sont disposés sous la surface de roulement **(11)** à l'état neuf de la bande de roulement ;
- les canaux sont transversaux et relient la région médiane de la bande de roulement aux faces latérales de la bande de roulement ;
- chaque canal transversal reliant la région médiane à une face latérale comprend au moins un changement de direction entre la région médiane et la face latérale ; et
- une distance longitudinale maximale entre les points d'un canal transversal les plus éloignés dans la direction longitudinale est comprise entre 10% et 50% de la largeur de la bande de roulement et de préférence entre 10% et 30%.

De préférence, les dispositifs de blocage comprennent des faces de contact de longueur Lc selon la direction du canal sous-jacent, ladite longueur Lc étant comprise entre 10mm et 40mm.

De préférence, les ouvertures radiales ont selon la direction du canal sous-jacent une longueur Lo avec Lc ≤ Lo ≤ 3 ^{∗} Lc.

De préférence, les dispositifs de blocage ont une hauteur radiale comprise entre 25% et 75% de l'épaisseur maximale de matière à user en roulage.

De préférence, les dispositifs de blocage sont situés à une distance radiale de la surface de roulement comprise entre 0 et 5mm.

De préférence, l'alternance des ouvertures radiales et des dispositifs de blocage d'un canal est décalée axialement par rapport à l'alternance des ouvertures radiales et des dispositifs de blocage du canal longitudinalement adjacent.

(supprimé)

De préférence, les canaux débouchant sur une face latérale de la bande de roulement sont en outre connectés dans la région médiane de la bande de roulement aux canaux débouchant sur l'autre face latérale de la bande de roulement. Alternativement, les canaux débouchant sur une face latérale de la bande de roulement sont décalés longitudinalement dans la région médiane par rapport aux canaux débouchant sur l'autre face latérale de la bande de roulement.

De préférence, la bande de roulement comprend en outre des incisions d'épaule d'orientation sensiblement longitudinale situées à une distance Di des faces latérales de la bande de roulement comprise entre 15% et 25% de la largeur de la bande de roulement.

De préférence, lesdites incisions d'épaule relient des ouvertures radiales de canaux longitudinalement adjacents.

(supprimé)

De préférence, la bande de roulement comprend en outre des incisions centrales d'orientation sensiblement longitudinale situées axialement entre les incisions d'épaule.

De préférence, lesdites incisions centrales relient des ouvertures radiales de canaux longitudinalement adjacents.

De préférence, lesdites incisions centrales ont une profondeur supérieure à 80% de l'épaisseur maximale de matière à user et de préférence une largeur inférieure à 1,5 mm.

L'invention concerne également un pneu de véhicule poids lourd pourvu d'une bande de roulement telle que décrite précédemment.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure **1** est une vue en perspective d'un pneu comprenant une bande de roulement selon un premier mode de réalisation de l'invention.
La figure **2** est une vue de face d'une partie de la bande de roulement de la figure **1** à l'état neuf.
La figure **3** est une vue partielle similaire à celle de la figure **2** de la même bande de roulement après usure d'une importante proportion de l'épaisseur maximale de matière à user en roulage.
La figure **4** est une vue partielle similaire à celle de la figure **2** à une échelle supérieure.
La figure **5a** est une vue partielle de détail en coupe selon la ligne **A-A** de la figure **4****.**
La figure **5b** est une vue partielle de détail en coupe selon la ligne **B-B** de la figure **4****.**
La figure **5c** est une vue partielle de détail en coupe selon la ligne **C-C** de la figure **4****.**
La figure **5d** est une vue partielle de détail en coupe selon la ligne **D-D** de la figure **4****.**
La figure **5e** est une vue partielle de détail en coupe selon la ligne **E-E** de la figure **4****.**
La figure **5f** est une vue à plus grand échelle du détail **F** de la figure **4****.**
La figure **6** est une vue de face similaire à celle de la figure **2** d'une bande de roulement selon un deuxième mode de réalisation de l'invention.
La figure **7** est une vue en coupe selon la ligne brisée **G-G** de la figure **6****.**
La figure **8** est une vue de face similaire à celles des figures **2** et **6** d'une bande de roulement selon un troisième mode de réalisation de l'invention.

### DESCRIPTION DES FIGURES

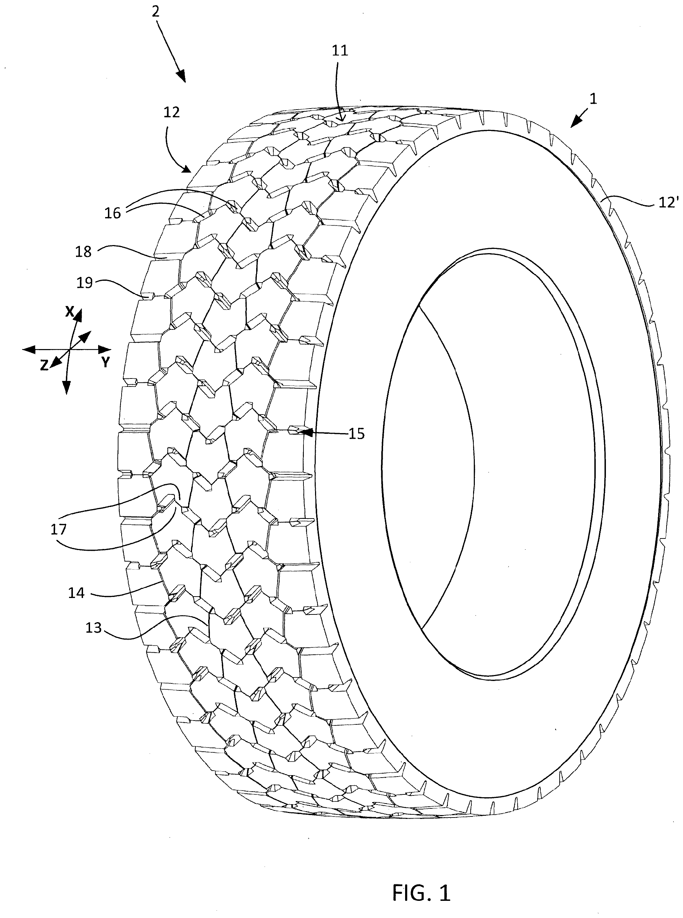

À la figure 1, on a représenté un pneu 2 pour véhicule poids-lourd comprenant une bande de roulement 1 selon l'invention. La bande de roulement comprend une surface de roulement **11,** des faces latérales respectives **12** et **12'** et des éléments de sculpture comme des incisions **13** et **14,** des canaux transversaux **15,** des ouvertures radiales **16** ou des rainures transversales **18.** Dans la présente demande, un élément de sculpture comme un canal ou une rainure est dit transversal lorsque son orientation générale forme un angle égal ou supérieur à 45 degrés avec la direction longitudinale **X.** La bande de roulement selon l'invention est dépourvue de rainures circonférentielles (longitudinales).

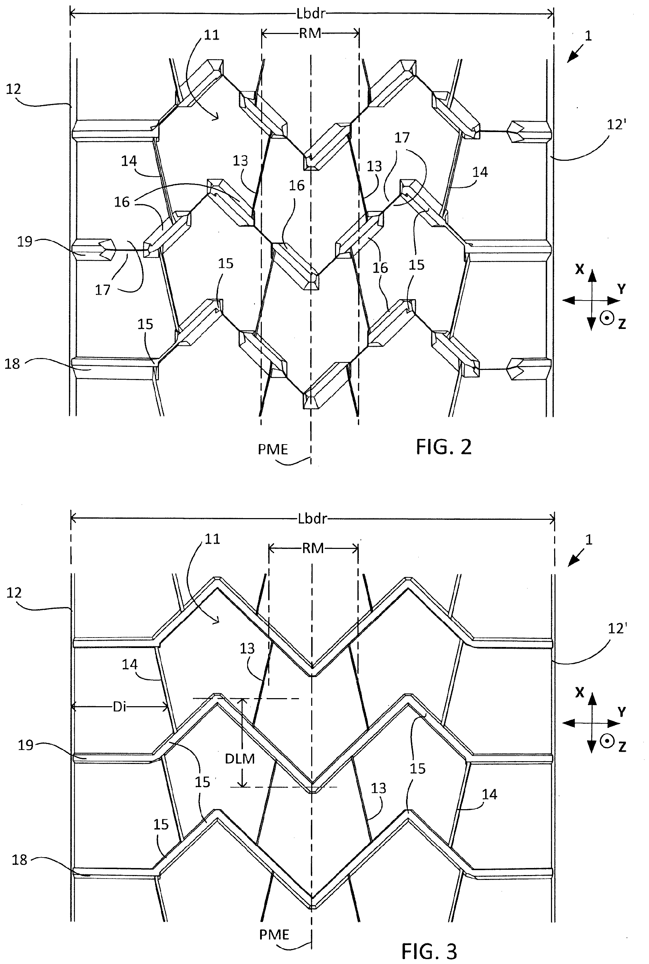

À la figure **2****,** on a représenté en vue de face une fraction de la bande de roulement de la figure **1** à une échelle agrandie permettant en particulier de mieux distinguer les éléments qui composent sa sculpture. La bande de roulement est ici représentée à l'état neuf. La bande de roulement est divisée en deux parties égales par le plan médian équatorial **PME.** On désigne par région médiane **RM** de la bande de roulement la région située de part et d'autre du plan médian équatorial sur une largeur correspondant à 20% de la largeur **Lbdr** de la bande de roulement.

Les canaux transversaux **15** sont situés dans l'épaisseur de matière à user, c'est-à-dire sous la surface de roulement **11 à** l'état neuf de la bande de roulement. Les ouvertures radiales **16** relient selon la direction radiale les canaux transversaux à la surface de roulement **11.** Au fond des ouvertures radiales, on aperçoit donc les canaux transversaux **15.** Des dispositifs de blocage **17** sont intercalés entre les ouvertures radiales successives le long des canaux transversaux. Les canaux transversaux **15** qui sont disposés en fond de sculpture relient la région médiane **RM** de la bande de roulement aux faces latérales **12** et **12'** de manière à pouvoir évacuer latéralement l'eau de l'aire de contact. Dans ce mode de réalisation, les canaux débouchent sur les faces latérales dans des rainures transversales **18, 19.**

De préférence comme on le voit bien sur cette vue de face, l'alternance des ouvertures radiales et des dispositifs de blocage d'un canal est décalée axialement (transversalement) par rapport à l'alternance des ouvertures radiales et des dispositifs de blocage du canal longitudinalement adjacent. Le long d'une direction circonférentielle, une ouverture radiale est ainsi sensiblement en regard d'un dispositif de blocage du canal transversal adjacent et vice-versa.

À la figure 3, on a représenté la même fraction de la bande de roulement que celle de la figure 2 telle qu'elle apparaît après qu'une grande partie de l'épaisseur maximale de matière à user a été effectivement usée. La bande de roulement partiellement usée représentée ici comporte encore environ 5 mm de creux, c'est à dire qu'il reste environ 3,4 mm de matière à user jusqu'à la limite légale de 1,6 mm, ce qui correspond à moins de 20 % de l'épaisseur maximale de matière à user. On voit plus clairement sur cette figure la partie restante des canaux transversaux qui relient la région médiane aux faces latérales. Les dispositifs de blocage et donc les contours des ouvertures radiales ont à ce stade d'usure complètement disparu. Comme décrit plus haut, les canaux transversaux étant disposés en fond de sculpture génèrent des rainures ouvertes et continues en fin d'usure. On voit également bien sur cette vue que les canaux comprennent des changements de direction entre la région médiane et la face latérale. Sur ce mode de réalisation, on compte deux changements de direction entre la région médiane et la face latérale. Si l'on observe la trajectoire d'un canal transversal entre la région médiane et la face latérale, on peut mesurer une distance longitudinale maximale **DLM** entre les deux points du canal les plus éloignés l'un de l'autre dans la direction longitudinale. Selon l'invention la distance longitudinale maximale **DLM** est comprise entre 10% et 50% de la largeur de la bande de roulement **Lbdr** et de préférence entre 10% et 30%. Dans l'exemple représenté ici, la distance **DLM** vaut 18,5% de **Lbdr.** Les incisions centrales **13** et les incisions d'épaule **14** sont sensiblement longitudinales, leur orientation générale faisant un angle inférieur ou égal à 20° avec la direction longitudinale **X.** Ces incisions connectent deux canaux adjacents de préférence au niveau des ouvertures radiales et des rainures transversales. Les incisions d'épaule **14** sont situées à une distance **Di** des faces latérales de la bande de roulement, Di étant comprise entre 15% et 25% de la largeur **Lbdr** de la bande de roulement. Les incisions centrales **13** sont situées entre les incisions d'épaule **14** respectives, c'est à dire dans une zone centrale de la bande de roulement représentant au moins 50% de la largeur **Lbdr.**

On voit bien sur la figure 3 que dans ce mode de réalisation les canaux transversaux relient non seulement les faces latérales à la région médiane de la bande de roulement mais connectent également les faces latérales entre elles puisque les canaux de la partie gauche de la bande de roulement sont directement connectés aux canaux de la partie droite. Une autre particularité de ce premier mode de réalisation est que le motif de la sculpture est directionnel, c'est à dire qu'il n'est pas indépendant du sens de rotation du pneumatique.

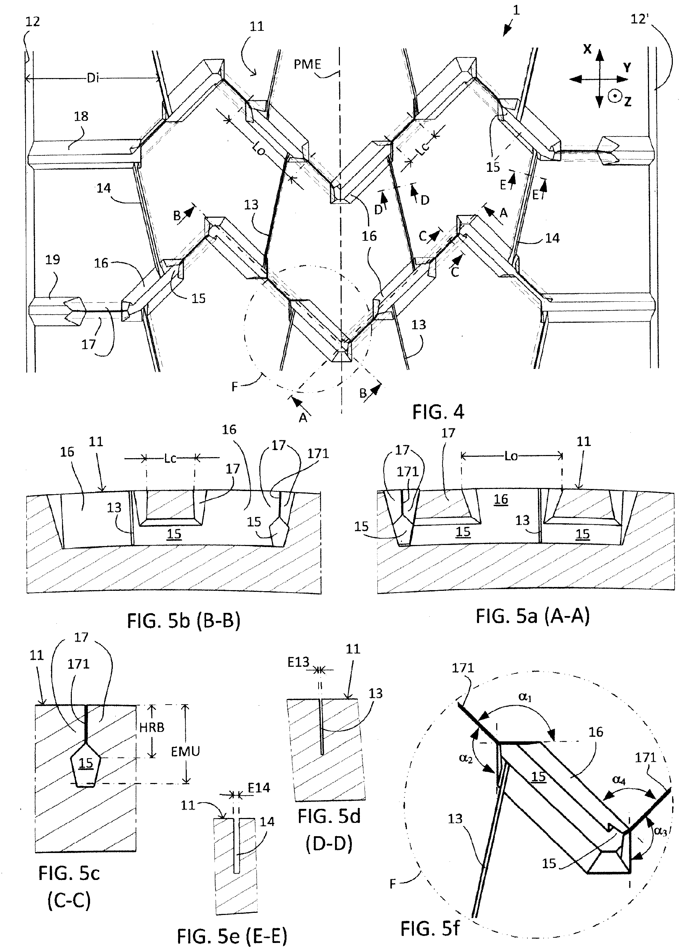

La figure **4** et les vues de détail en coupe des figures **5a** à **5e** permettent de mieux décrire ce premier mode de réalisation de l'invention. Sur la figure **4** similaire à la figure **2** mais à plus grande échelle encore, on a fait figurer en traits pointillés les tronçons des canaux transversaux **15** qui, à l'état neuf de la bande de roulement neuf, sont cachés sous la surface de roulement **11** par les dispositifs de blocage.

Les dispositifs de blocage comprennent des faces de contact de longueur **Lc**. Cette longueur est mesurée selon la direction du canal sous-jacent. Si les faces de contact ne sont pas comme ici parallèles et rectilignes mais par exemple courbes, on considérera la longueur pour laquelle les faces ne sont pas éloignées de plus de 1,5 mm l'une de l'autre.

Les ouvertures radiales ont une longueur **Lo.** Cette longueur est mesurée selon la direction du canal sous-jacent entre deux dispositifs de blocage successifs le long du canal. Si les faces de contact des dispositifs de blocage ne sont pas parallèles et rectilignes mais par exemple courbes, on considérera la longueur pour laquelle les faces sont éloignées de plus de 1,5 mm l'une de l'autre.

La figure **5a** est une vue en coupe selon le plan **A-A** de la figure **4** montrant principalement la première partie du canal transversal reliant la région médiane à la face latérale droite de la bande de roulement. Le long du canal **15,** cette coupe montre l'alternance de deux dispositifs de blocage **17** et d'une ouverture radiale **16**. À la gauche de cette coupe, on voit également le canal transversal **15** qui relie la région médiane à la face latérale gauche de la bande de roulement. Au-dessus de ce canal, on voit bien le premier dispositif de blocage **17** et l'incision **171** qui sépare les deux faces de contact en regard du dispositif de blocage. On voit également l'incision centrale **13** dont la hauteur radiale (profondeur) est équivalente à celle du canal.

La figure **5b** est une vue en coupe selon le plan **B-B** de la figure **4** montrant principalement la première partie du canal transversal reliant la région médiane à la face latérale gauche de la bande de roulement. Le long du canal **15,** cette coupe montre l'alternance de deux ouvertures radiales **16** et d'un dispositif de blocage **17.** À la droite de cette coupe, on voit également le canal transversal **15** qui relie la région médiane à la face latérale droite de la bande de roulement.

La figure **5c** est une vue en coupe selon le plan **C-C** de la figure **4** montrant le canal transversal **15** dans une partie où il est invisible de l'extérieur du fait de la présence des dispositifs de blocage **17.** De préférence, selon l'invention la largeur des canaux transversaux est comprise entre 4 et 10 mm et de préférence encore entre 6 et 8 mm. Dans le mode de réalisation représenté ici, le canal a une largeur d'environ 7 mm dans sa partie la plus large située radialement à l'extérieur et d'environ 5 mm dans sa partie radialement intérieure. De préférence, les dispositifs de blocage font comme représenté ici partie de la surface de contact **11** à neuf c'est à dire qu'ils viennent en contact avec la chaussée. Cependant, de manière connue en soi, ils peuvent également être décalés sous la surface de contact, d'une distance radiale n'excédant de préférence pas 5 mm.

La hauteur radiale **HRB** des dispositifs de blocage représente de préférence 25 à 75% de l'épaisseur maximale de matière à user. Sur cet exemple, **HRB** représente environ 65% de l'épaisseur maximale de matière à user **EMU.**

On voit bien sur la coupe de la figure **5c** que dans cette partie le canal invisible à l'état neuf commencera à apparaître à la surface de roulement lorsque l'usure de la bande de roulement aura éliminé l'épaisseur correspondant à la hauteur des faces de contact des dispositifs de blocage **17.**

La figure **5d** est une vue en coupe selon le plan **D-D** de la figure **4** montrant une incision centrale **13.** La largeur des incisions centrales est ici inférieure à 1 mm et leur profondeur (hauteur radiale) comme indiquée plus haut correspond sensiblement à l'épaisseur maximale de matière à user.

La figure **5e** est une vue en coupe selon le plan **E-E** de la figure **4** montrant une incision d'épaule **14.** La largeur des incisions d'épaule est ici d'environ 2,5 mm et leur profondeur correspond sensiblement à l'épaisseur maximale de matière à user. Dans le cas d'incisions proches des faces latérales de la bande de roulement, une largeur appropriée pour que les parois de l'incision viennent bien en contact lors de son passage dans l'aire de contact se situe entre 2 mm et 4 mm.

La figure **5f** est une vue du détail référencé **F** sur la figure **4** montrant en particulier une ouverture radiale **16** à plus grande échelle encore. Cette vue permet d'illustrer l'angle **α** que font les faces distales des dispositifs de blocage avec la direction moyenne des faces de contact desdits dispositifs de blocage **17.** L'angle **α** est de préférence compris entre 90° et 150°. Sur cette figure, on voit **α₁**, **α₂** et **α₃** qui valent environ 135° et **α₄** qui vaut environ 90°. Sur cette vue, on distingue également mieux le début de la partie cachée du canal transversal **15** qui s'étend sous le dispositif de blocage et son incision **171.**

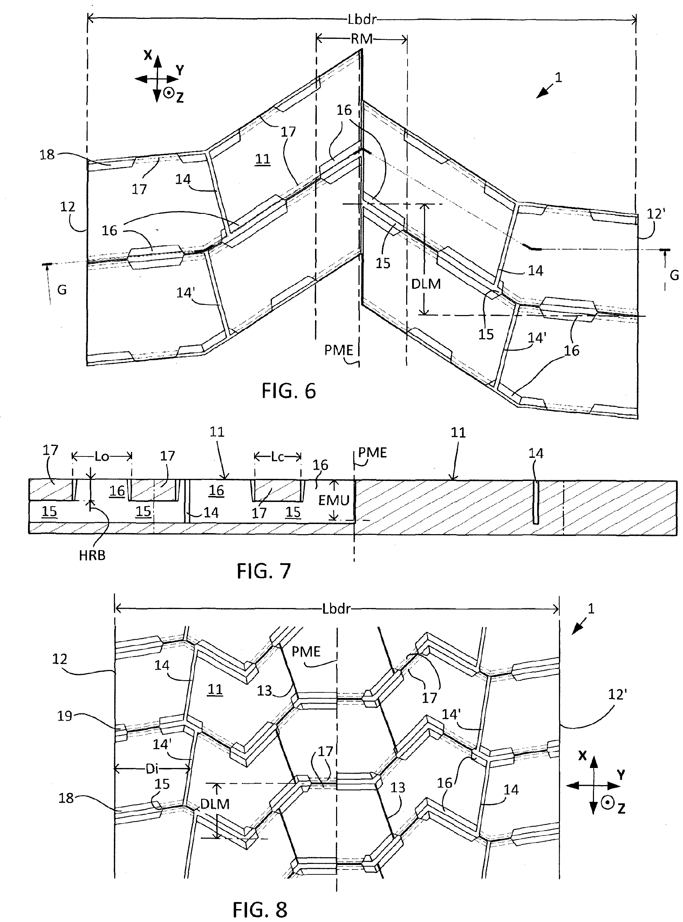

La figure **6** est une vue similaire à la figure **4** montrant les principes d'un deuxième mode de réalisation d'une bande de roulement selon l'invention, la figure **7** étant une vue en coupe selon la ligne brisée **G-G** de la figure **6****.** Dans ce mode de réalisation, les canaux transversaux de la partie gauche de la bande de roulement sont intercalés avec les canaux de la partie droite et ne sont pas connectés entre eux dans la région médiane. Chaque canal compte ici un seul changement de direction entre la région médiane et la face latérale qu'il y relie. D'autre part, cet exemple de réalisation comprend des incisions d'épaule **14, 14'** mais ne comprend pas d'incision centrale. Les dites incisions d'épaule relie selon le cas deux ouvertures radiales (configuration de l'incision **14)** de deux canaux adjacents ou une ouverture radiale à un dispositif de blocage **17** (configuration de l'incision **14').** Dans ce mode de réalisation, **DLM** vaut 20,5% de **Lbdr.**

Ici aussi l'alternance des ouvertures radiales et des dispositifs de blocage d'un canal est décalée axialement par rapport à l'alternance des ouvertures radiales et des dispositifs de blocage du canal longitudinalement adjacent de sorte que le long d'une direction circonférentielle, une ouverture radiale est ainsi sensiblement en regard d'un dispositif de blocage du canal adjacent et vice-versa.

La figure **7** permet aussi de bien visualiser les mesures géométriques des dispositifs de blocages (hauteur **HRB** et longueur **Lc**) et des ouvertures radiales (longueur **Lo).**

La figure **8** est une vue similaire à la figure **4** montrant les principes d'un troisième mode de réalisation d'une bande de roulement selon l'invention. Dans ce mode de réalisation, les canaux transversaux de la partie gauche de la bande de roulement sont de nouveau reliés aux canaux de la partie droite et donc connectés entre eux dans la région médiane. Les canaux comptent ici trois changements de direction entre la région médiane et la face latérale qui y est reliée. D'autre part, cet exemple de réalisation comprend des incisions d'épaule **14, 14'** similaires à celles du mode de réalisation de la figure 6 et des incisions centrales **13** similaires à celles du mode de réalisation de la figure **4****.**

Dans ce mode de réalisation, **DLM** vaut 12,5% de **Lbdr.** Une autre particularité de ce mode de réalisation est que le motif est non-directionnel, c'est à dire qu'il est indépendant du sens de rotation du pneumatique.

L'invention qui a été décrite ci-dessus ne saurait bien sûr être limitée à ces seules variantes et diverses modifications peuvent y être apportées tout en demeurant dans le cadre défini par les revendications.

## Revendications

1. Bande de roulement **(1)** de pneu **(2)** pour véhicule poids-lourd comprenant à l'état neuf une épaisseur maximale de matière à user en roulage **(EMU),** une surface de roulement **(11),** des faces latérales **(12, 12'),** une région médiane **(RM),** cette bande de roulement étant pourvue d'éléments de sculpture, lesdits éléments de sculpture comprenant des canaux **(15),** des incisions **(13, 14),** des ouvertures radiales **(16)** et des dispositifs de blocage **(17),** lesdits canaux étant disposés dans l'épaisseur de la bande de roulement et connectés à la surface de roulement par les ouvertures radiales, lesdites ouvertures radiales étant disposées en alternance avec les dispositifs de blocage le long desdits canaux,
- les canaux étant disposés sous la surface de roulement **(11)** à l'état neuf de la bande de roulement ;
- les canaux étant transversaux et relient la région médiane de la bande de roulement aux faces latérales de la bande de roulement ;
- chaque canal transversal reliant la région médiane à une face latérale comprenant au moins un changement de direction entre la région médiane et ladite face latérale ; et
- une distance longitudinale maximale **(DLM)** entre les points d'un canal transversal les plus éloignés dans la direction longitudinale étant comprise entre 10% et 50% de la largeur de la bande de roulement **(Lbdr)** et de préférence entre 10% et 30%, cette bande de roulement étant **caractérisée en ce qu'**elle est dépourvue de rainure circonférentielle.

2. Bande de roulement selon la revendication 1, dans laquelle les dispositifs de blocage comprennent des faces de contact de longueur **Lc** selon la direction du canal sous-jacent, ladite longueur **Lc** étant comprise entre 10mm et 40mm.

3. Bande de roulement selon la revendication 2 dans laquelle les ouvertures radiales ont selon la direction du canal sous-jacent une longueur **Lo** avec Lc ≤ Lo ≤ 3 ^{∗} Lc.

4. Bande de roulement selon l'une quelconque des revendications précédentes dans laquelle les dispositifs de blocage ont une hauteur radiale **HRB** comprise entre 25% et 75% de l'épaisseur maximale de matière à user en roulage **(EMU).**

5. Bande de roulement selon l'une quelconque des revendications précédentes dans laquelle les dispositifs de blocage sont situés à une distance radiale de la surface de roulement comprise entre 0 et 5mm.

6. Bande de roulement selon l'une quelconque des revendications précédentes dans laquelle l'alternance des ouvertures radiales et des dispositifs de blocage d'un canal est décalée axialement par rapport à l'alternance des ouvertures radiales et des dispositifs de blocage du canal longitudinalement adjacent.

7. Bande de roulement selon l'une des revendications précédentes dans laquelle les canaux débouchant sur une face latérale de la bande de roulement sont en outre connectés dans la région médiane de la bande de roulement aux canaux débouchant sur l'autre face latérale de la bande de roulement.

8. Bande de roulement selon l'une des revendications **1** à **6** dans laquelle les canaux débouchant sur une face latérale de la bande de roulement sont décalés longitudinalement dans la région médiane par rapport aux canaux débouchant sur l'autre face latérale de la bande de roulement.

9. Bande de roulement selon l'une des revendications précédentes comprenant en outre des incisions d'épaule (14) d'orientation sensiblement longitudinale situées à une distance **Di** des faces latérales de la bande de roulement comprise entre 15% et 25% de la largeur de la bande de roulement **(Lbdr).**

10. Bande de roulement selon la revendication **9** dans laquelle lesdites incisions d'épaule relient des ouvertures radiales de canaux longitudinalement adjacents.

11. Bande de roulement selon l'une des revendications **9** à **10** comprenant en outre des incisions centrales **(13)** d'orientation sensiblement longitudinale situées axialement entre les incisions d'épaule et reliant de préférence des ouvertures radiales de canaux longitudinalement adjacents.

12. Bande de roulement selon la revendication **11** dans laquelle lesdites incisions centrales ont une profondeur supérieure à 80% de l'épaisseur maximale de matière à user **(EMU)** et de préférence une largeur **(E13)** inférieure à 1,5 mm.

13. Pneu de véhicule poids lourd pourvu d'une bande de roulement selon l'une des revendications précédentes.

## Patentansprüche

1. Laufstreifen (1) eines Reifens (2) für ein Schwerlastfahrzeug, welcher im Neuzustand eine maximale beim Fahren abzunutzende Materialstärke (EMU), eine Lauffläche (11), Seitenflächen (12, 12') und einen Mittelbereich (RM) umfasst, wobei dieser Laufstreifen mit Profilelementen versehen ist, wobei die Profilelemente Kanäle (15), Einschnitte (13, 14), radiale Öffnungen (16) und Blockiervorrichtungen (17) umfassen, wobei die Kanäle in der Dicke des Laufstreifens angeordnet und mit der Lauffläche durch radiale Öffnungen verbunden sind, wobei die radialen Öffnungen abwechselnd mit den Blockiervorrichtungen entlang der Kanäle angeordnet sind,
- wobei die Kanäle im Neuzustand des Laufstreifens unter der Lauffläche (11) angeordnet sind;
- wobei die Kanäle quer verlaufen und den Mittelbereich des Laufstreifens mit den Seitenflächen des Laufstreifens verbinden;
- wobei jeder quer verlaufende Kanal, der den Mittelbereich mit einer Seitenfläche verbindet, zwischen dem Mittelbereich und dieser Seitenfläche wenigstens eine Richtungsänderung umfasst; und
- wobei ein maximaler Längsabstand (DLM) zwischen den Punkten eines quer verlaufenden Kanals, die in der Längsrichtung am weitesten voneinander entfernt sind, zwischen 10 % und 50 % der Breite des Laufstreifens (Lbdr) beträgt, und vorzugsweise zwischen 10 % und 30 %, wobei dieser Laufstreifen **dadurch gekennzeichnet ist, dass** er nicht mit einer Umfangsrille versehen ist.

2. Laufstreifen nach Anspruch 1, wobei die Blockiervorrichtungen Kontaktflächen der Länge Lc in der Richtung des darunterliegenden Kanals umfassen, wobei die Länge Lc zwischen 10 mm und 40 mm liegt.

3. Laufstreifen nach Anspruch 2, wobei die radialen Öffnungen in der Richtung des darunterliegenden Kanals eine Länge Lo aufweisen, mit Lc ≤ Lo ≤ 3 * Lc.

4. Laufstreifen nach einem der vorhergehenden Ansprüche, wobei die Blockiervorrichtungen eine radiale Höhe HRB aufweisen, die zwischen 25 % und 75 % der maximalen beim Fahren abzunutzenden Materialstärke (EMU) liegt.

5. Laufstreifen nach einem der vorhergehenden Ansprüche, wobei sich die Blockiervorrichtungen in einem radialen Abstand von der Lauffläche befinden, der zwischen 0 und 5 mm liegt.

6. Laufstreifen nach einem der vorhergehenden Ansprüche, wobei die abwechselnde Anordnung der radialen Öffnungen und der Blockiervorrichtungen eines Kanals in Bezug auf die abwechselnde Anordnung der radialen Öffnungen und der Blockiervorrichtungen des in Längsrichtung benachbarten Kanals axial versetzt ist.

7. Laufstreifen nach einem der vorhergehenden Ansprüche, wobei die Kanäle, die auf einer Seitenfläche des Laufstreifens münden, außerdem im Mittelbereich des Laufstreifens mit den Kanälen verbunden sind, die auf der anderen Seitenfläche des Laufstreifens münden.

8. Laufstreifen nach einem der Ansprüche 1 bis 6, wobei die Kanäle, die auf einer Seitenfläche des Laufstreifens münden, im Mittelbereich in Bezug auf die Kanäle, die auf der anderen Seitenfläche des Laufstreifens münden, in Längsrichtung versetzt sind.

9. Laufstreifen nach einem der vorhergehenden Ansprüche, welcher außerdem im Wesentlichen längs ausgerichtete Schultereinschnitte (14) umfasst, die sich in einem Abstand Di von den Seitenflächen des Laufstreifens befinden, der zwischen 15 % und 25 % der Breite des Laufstreifens (Lbdr) beträgt.

10. Laufstreifen nach Anspruch 9, wobei die Schultereinschnitte radiale Öffnungen von in Längsrichtung benachbarten Kanälen verbinden.

11. Laufstreifen nach einem der Ansprüche 9 bis 10, welcher außerdem im Wesentlichen längs ausgerichtete zentrale Einschnitte (13) umfasst, die sich axial zwischen den Schultereinschnitten befinden und vorzugsweise radiale Öffnungen von in Längsrichtung benachbarten Kanälen verbinden.

12. Laufstreifen nach Anspruch 11, wobei die zentralen Einschnitte eine Tiefe, die größer als 80 % der maximalen abzunutzenden Materialstärke (EMU) ist, und vorzugsweise eine Breite (E13), die kleiner als 1,5 mm ist, aufweisen.

13. Schwerlastfahrzeugreifen, der mit einem Laufstreifen nach einem der vorhergehenden Ansprüche versehen ist.

## Claims

1. - Tread (1) of a tyre (2) for a heavy-duty vehicle comprising, when new, a maximum thickness of material to be worn away during running (EMU), a tread surface (11), side faces (12, 12'), a middle region (RM), this tread being provided with tread pattern elements, said tread pattern elements comprising channels (15), sipes (13, 14), radial openings (16) and blocking devices (17), said channels being arranged in the thickness of the tread and connected to the tread surface by the radial openings, said radial openings being arranged alternating with the blocking devices along said channels,
- the channels being arranged below the tread surface (11) when the tread is new;
- the channels being transverse and connect the middle region of the tread to the side faces of the tread;
- each transverse channel connecting the middle region to a side face comprising at least one change of direction between the middle region and said side face; and
- a maximum longitudinal distance (DLM) between the points of a transverse channel furthest apart in the longitudinal direction being between 10% and 50% of the width of the tread (Lbdr), and preferably between 10% and 30%, this tread being **characterized in that** it is devoid of a circumferential groove.

2. - Tread according to Claim 1, in which the blocking devices comprise contact faces with a length **Lc** in the direction of the underlying channel, said length **Lc** being between 10 mm and 40 mm.

3. - Tread according to Claim 2, in which the radial openings have, in the direction of the underlying channel, a length **Lo** where Lc ≤ Lo ≤ 3 ^{∗} Lc.

4. - Tread according to any one of the preceding claims, in which the blocking devices have a radial height HRB of between 25% and 75% of the maximum thickness of material to be worn away during running (EMU).

5. - Tread according to any one of the preceding claims, in which the blocking devices are situated at a radial distance from the tread surface of between 0 and 5 mm.

6. - Tread according to any one of the preceding claims, in which the alternation of the radial openings and the blocking devices of one channel is axially offset relative to the alternation of the radial openings and blocking devices of the longitudinally adjacent channel.

7. - Tread according to any one of the preceding claims, in which the channels that open onto one side face of the tread are further connected in the middle region of the tread to the channels that open onto the other side face of the tread.

8. - Tread according to any one of Claims 1 to 6, in which the channels that open onto one side face of the tread are longitudinally offset in the middle region relative to the channels that open onto the other side face of the tread.

9. - Tread according to one of the preceding claims, further comprising shoulder sipes (14) oriented substantially longitudinally, situated at a distance Di from the side faces of the tread of between 15% and 25% of the width of the tread (Lbdr).

10. - Tread according to Claim 9, in which said shoulder sipes connect radial openings of longitudinally adjacent channels.

11. - Tread according to any one of Claims 9 to 10, further comprising substantially longitudinally oriented central sipes (13) situated axially between the shoulder sipes and preferably connecting radial openings of longitudinally adjacent channels.

12. - Tread according to Claim 11, in which said central sipes have a depth greater than 80% of the maximum thickness of material to be worn away (EMU) and preferably a width (E13) of less than 1.5 mm.

13. - Tyre for a heavy-duty vehicle provided with a tread according to any one of the preceding claims.
